# EUROPÄISCHE PATENTSCHRIFT

(11) **EP 1 163 634 B1**
(45) Veröffentlichungstag und Bekanntmachung des Hinweises auf die Patenterteilung: **02.01.2004**
(21) Anmeldenummer: 00910506.5
(22) Anmeldetag: 27.01.2000
(51) Int. Cl.: G06K 19/07

(54) **CHIPKARTE MIT EINER VORRICHTUNG ZUM LADEN VON PERSONALISIERUNGSDATEN**
CHIP CARD WITH A DEVICE FOR LOADING PERSONALISATION DATA
CARTE A PUCE AVEC UN DISPOSITIF POUR CHARGER DES DONNEES DE PERSONNALISATION

(30) Priorität: 26.02.1999 DE 19908285
(43) Veröffentlichungstag der Anmeldung: 19.12.2001
(73) Patentinhaber: Orga Kartensysteme GmbH, 33104 Paderborn (DE)
(72) Erfinder: KONZE, Bernhard, D-33100 Paderborn (DE); WOLLSCHLÄGER, Rolf, D-33102 Paderborn (DE); WÜPPENHORST, Guido, D-33102 Paderborn (DE)
(86) Internationale Anmeldenummer: PCT/DE2000/000236
(87) Internationale Veröffentlichungsnummer: WO 2000/052635

(56) Entgegenhaltungen:
- EP-A- 0 617 369
- DE-A- 19 634 064
- GB-A- 2 298 613
- US-A- 5 875 480

## Beschreibung

Die Erfindung betrifft eine Chipkarte mit einer Vorrichtung zum Laden von Personalisierungsdaten nach dem Oberbegriff des Patentanspruchs 1.

Bekannte Chipkarten weisen einen Kartenkörper aus Kunststoff auf, mit einer Vertiefung, in der ein Chipmodul mit einem Chip implantiert ist. Der Chip weist im wesentlichen einen Mikroprozessor und einen Speicher auf. Im Rahmen eines Herstellungsprozesses werden in den Speicher der "jungfräulichen" Chipkarte Personalisierungsdaten, wie IMSI-Nummer etc., eingeschrieben, die den Gebrauch der Chipkarte erst ermöglichen. Nach der bekannten Art der Personalisierung erfolgt die Datenübertragung durch Steuerung des Mikroprozessors der Chipkarte, der unter Ablauf eines im Speicher gespeicherten Datenübertragungsprogramms eine asynchrone Datenübertragung ermöglicht. Aufgrund der Gewährleistung einer technisch zuverlässigen Übertragung arbeitet der Mikroprozessor bei einer reduzierten Frequenz, die durch einen Teilerfaktor nach ISO 7816 zwischen 372 und 64 festgelegt ist. Die Übertragung von größeren Datenmengen erfordert einen relativ großen Zeitaufwand.

Aus der GB 2298613 ist eine Chipkarte bekannt, die sowohl als Speicherkarte als auch als Mikroprozessorkarte eingesetzt werden kann, je nachdem für welchen Einsatzzweck der Nutzer dieselbe vorsieht bzw. mit welchem Endgerät die Chipkarte kommuniziert. Hierzu verfügt die Chipkarte über zwei Ports (Schnittstellen) über die die jeweilige Anwendung erfolgt.

Ein Port ist verbunden mit einem Prozessor. Der andere ist verbunden mit einem Speicher. Prozessoren und Speicher arbeiten mit unterschiedlichen Kommunikationsformaten und speichern unterschiedliche Informationen. Eine Verbindung zwischen Speicher und Prozessor ermöglicht es, dass die Speicherfunktion dieser Chipkarte auch über den für den Prozessor vorgesehenen Port durchgeführt werden kann. D.h. die "Speicherkarte" dieser Chipkarte kann auch an einem Endgerät eingesetzt werden, das für Mikroprozessorkarten vorgesehen ist. Die Personalisierung erfolgt bei dieser Chipkarte auf kerkömmlichem, oben beschriebenem Wege.

In der DE 196 34 064 ist eine Chipkarte beschrieben, bei der eine herkömmliche Chipkarte, die einen Mikroprozessor sowie einen mit diesem verbundenen Speicher enthält, einen weiteren, für jeden editierbaren Speicher mit Daten zur Identifizierung des Besitzers enthält. Die Personalisierung, bei der Daten auf den herkömmlich in der Chipkarte enthaltenen Speicher übertragen werden, erfolgt auf herkömmlichenm Wege.

Aufgabe der Erfindung ist es daher, eine Chipkarte mit einer Vorrichtung zum Laden von Personalisierungsdaten derart auszubilden; daß ein erheblich schnelleres Laden der Chipkarte ermöglicht wird.

Zur Lösung dieser Aufgabe weist die Erfindung die Merkmale des Patentanspruchs 1 auf.

Der besondere Vorteil der Erfindung liegt darin, daß durch den direkten Zugriff auf den Speicher der Chipkarte über die Speicherschnittstelle unter Umgehung des Mikroprozessors der Chipkarte die Ladezeit erheblich reduziert wird. Dadurch, daß eine eigene Taktleitung nutzbar ist, kann eine erhöhte Übertragungsfrequenz erzeugt werden.

Nach einer Weiterbildung der Erfindung erfolgt die Datenübertragung synchron, so daß eine gute Ausnutzung der von einer Personalisierungseinheit vorgegebenen Taktfrequenz bei der Datenübertragung gegeben ist.

Ein Ausführungsbeispiel der Erfindung wird nachfolgend anhand einer Zeichnung näher beschrieben.

Es zeigt:
- Figur: ein Blockschaltbild einer erfindungsgemäßen Vorrichtung.

Die erfindungsgemäße Vorrichtung einer Chipkarte wird eingesetzt zur Übertragung von Daten von einer Personalisierungseinheit 1 in einen Speicher 2 eines Chips 3, der als Bestandteil eines nicht dargestellten Chipmoduls in einer Vertiefung des Kartenkörpers der Chipkarte angeordnet ist. Die Personalisierung der Chipkarte umfaßt das Schreiben von Personalisierungsdaten, nämlich von hersteller- und/oder kundenspezifische Daten, in den Speicher 2.

Zu diesem Zweck weist die Personalisierungseinheit 1 eine nicht dargestellte Steuereinheit mit einem Mikroprozessor sowie einen Anwendungsspeicher auf, so daß nach Kontaktierung der Personalisierungseinheit 1 unter Anlage von Kontakten an Kontaktfeldern der Chipkarte eine Datenübertragung der Personalisierungsdaten erfolgen kann.

Die Kontaktfelder sind mit Anschlüssen 4 des Chips 3 verbunden, die zum einen mit einem Mikroprozessor 5 und zum anderen mit einer Speicherschnittstelle 6 elektrisch leitend verbunden sind. Sowohl von dem Mikroprozessor 5 als auch von der Speicherschnittstelle 6 führt eine Leitung 7 bzw. 8 zu einer Speichersteuerlogik 9, von der aus eine Leitung 10 zu dem Speicher 2 führt.

Die Vorrichtung der Chipkarte ermöglicht, die Personalisierungsdaten zum einen nach herkömmlicherweise von der Personalisierungseinheit 1 über die Anschlüsse 4 unter Mitwirkung des Mikroprozessors 5 in den Speicher 2 zu schreiben. Dabei werden die Personalisierungsdaten asynchron bei einer von dem Mikroprozessor 5 vorgegebenen reduzierten Taktfrequenz übertragen. Die erfindungsgemäße Vorrichtung ermöglicht also weiterhin die herkömmliche Datenübertragung.

Zum anderen ermöglicht das Vorsehen der Speicherschnittstelle 6, daß die Personalisierungsdaten direkt von der Personalisierungseinheit 1 in den Speicher 2 geladen werden können. Zu diesem Zweck weist die Speichersteuerlogik 9 einen Umschalter 11 als Schaltmittel auf, der zwischen einem direkten Ladebetrieb und einem von dem Mikroprozessor 5 unterstützten Ladebetrieb umschaltet. Der Umschalter 11 kann von der Personalisierungseinheit 1 angesteuert werden.

Alternativ kann sich nach Aktivierung des Ladevorgangs durch die Personalisierungseinheit 1 und nach einer Autorisierung, innerhalb derer die Zulässigkeit des Zugriffs auf den Speicher 2, beispielsweise durch Eingabe einer Geheimnummer, unter Einbindung des Mikroprozessors 5 überprüft wird, der Mikroprozessor 5 selbst abschalten, so daß automatisch in den direkten Ladebetrieb übergegangen werden kann. In diesem werden die Personalisierungsdaten synchron bei einer durch den Prozessor der Personalisierungseinheit 1 vorgegebenen Übertragungsfrequenz übertragen. Die Übertragungsfrequenz kann mit der Taktfrequenz der Personalisierungseinheit 1 übereinstimmen.

Die Speicherschnittstelle 6 kann als Eingangs/Ausgangslogik ausgebildet sein, die vorteilhaft eine Baueinheit mit der Speichersteuerlogik 9 und dem Speicher 2 bildet.

Der Speicher 2 ist vorzugsweise als Festwertspeicher bzw. als EEPROM/Flash-Speicher ausgebildet.

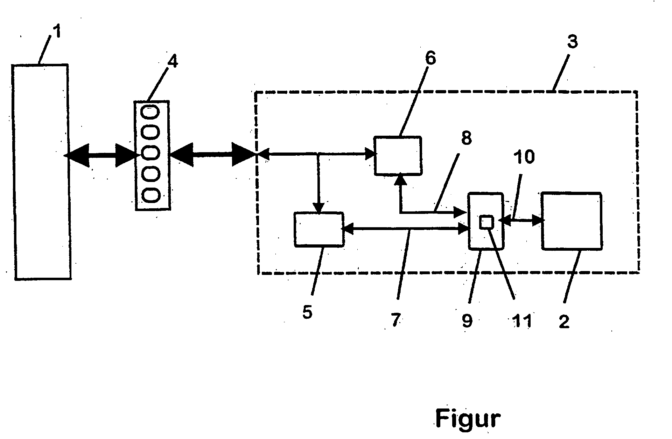

## Patentansprüche

1. Chipkarte mit einer Vorrichtung zum Laden von Personalisierungsdaten, wobei die Chipkarte einen Kartenkörper aufweist, in dem ein Chip (3) mit einem Mikroprozessor (5) und einem Speicher (2) eingefaßt ist, wobei der Mikroprozessor mit einem externen Anschluß (4) des Chips(3) und mit dem Speicher elektrisch leitend verbunden ist und der Speicher (2) zusätzlich mit diesem externen Anschluß(4) elektrisch leitend verbunden ist,
**dadurch gekennzeichnet,**
**daß** der Speicher (2) über eine gesonderte Speicherschnittstelle (6) mit dem externen Anschluss (4) des Chips (3) elektrisch leitend verbunden ist und daß ein Umschalter (11) zwischen dem Speicher (2) einerseits und dem Mikroprozessor (5) und der Speicherschnittstelle (6) andererseits vorgesehen ist, derart, daß von einer Personalisierungseinheit (1) Personalisierungsdaten entweder mittels eines durch den Mikroprozessor (5) unterstützten Ladebetriebs oder mittels eines direkten Ladebetriebs in den Speicher (2) einschreibbar sind.

2. Chipkarte nach Anspruch 1, **dadurch gekennzeichnet, daß** die Schaltmittel (11) in eine Speichersteuerlogik (9) des Speichers (2) integriert sind.

3. Chipkarte nach einem der Ansprüche 1 und 2, **dadurch gekennzeichnet, daß** die Speicherschnittstelle (6) als Eingangs-/Ausgangssteuerlogik ausgebildet ist, derart, daß Daten durch synchrone Übertragung in den Speicher (2) einschreibbar sind.

4. Chipkarte nach einem der Ansprüche 1 bis 3, **dadurch gekennzeichnet, daß** die Speicherschnittstelle (6) eine Baueinheit mit der Speichersteuerlogik (9) und dem Speicher (2) bildet.

5. Chipkarte nach einem der Ansprüche 1 bis 4, **dadurch gekennzeichnet, daß** der Mikroprozessor (5) über Steuermittel verfügt, derart, daß erst nach Durchführung einer Autorisierung das Schaltmittel (11) betätigbar ist zur Ermöglichung einer Datenübertragung von der Personalisierungseinheit (1) über die Speicherschnittstelle (6) zu dem Speicher (2).

6. Chipkarte nach einem der Ansprüche 1 bis 5, **dadurch gekennzeichnet, daß** der Speicher (2) als Festwertspeicher, insbesondere als EEPROM/Flash-Speicher, ausgebildet ist.

## Claims

1. Smart card having a device for loading personalization data, in which the smart card has a card body in which a chip (3) having a microprocessor (5) and a memory (2) is embedded, the microprocessor being electroconductively connected to an external terminal (4) of the chip (3) and being electroconductively connected to the memory, and the memory (2) being additionally electroconductively connected to said external terminal (4), **characterized in that** the memory (2) is electroconductively connected to the external terminal (4) of the chip (3) via a separate memory interface (6), and **in that** a switch (11) is provided between the memory (2) on the one hand and the microprocessor (5) and the memory interface (6) on the other hand in such a way that personalization data can be written into the memory (2) by a personalization unit (1) either by means of a loading mode supported by the microprocessor (5) or by means of a direct loading mode.

2. Smart card according to Claim 1, **characterized in that** the switch (11) is integrated in a memory control logic means (9) of the memory (2).

3. Smart card according to one of Claims 1 and 2, **characterized in that** the memory interface (6) is designed as an input/output control logic means, in such a way that data can be written into the memory (2) by synchronous transmission.

4. Smart card according to one of Claims 1 to 3, **characterized in that** the memory interface (6) forms an assembly with the memory control logic means (9) and the memory (2).

5. Smart card according to one of Claims 1 to 4, **characterized in that** the microprocessor (5) has control means such that the switch (11) can only be activated following an authorization to enable data to be transmitted from the personalization unit (1) to the memory (2) via the memory interface (6).

6. Smart card according to one of Claims 1 to 5, **characterized in that** the memory (2) is designed as a read-only memory, in particular as an EEPROM/flash memory.

## Revendications

1. Carte à puce avec un dispositif pour le chargement de données de personnalisation, ladite carte à puce présentant un corps de carte dans lequel une puce (3) est encastrée, avec un microprocesseur (5) et une mémoire (2), ledit microprocesseur étant relié, en conduction électrique, avec un raccord externe (4) de la puce (3) et avec la mémoire et la mémoire (2) étant, de plus, reliée, en conduction électrique, avec ce raccord externe 4,
**caractérisée en ce que**,
la mémoire (2) est reliée au raccord externe (4) de la puce (3), en conduction électrique, par l'intermédiaire d'une interface de mémoire (6) séparée et qu'un commutateur (11) est prévu entre la mémoire (2) et le microprocesseur (5), d'une part, et l'interface de mémoire (6), d'autre part, de sorte que des données de personnalisation peuvent être écrites, de l'unité de personnalisation (1) dans la mémoire (2), soit selon un mode de chargement assisté par le microprocesseur (5) soit selon un mode de chargement direct.

2. Carte à puce selon la revendication 1,
**caractérisée en ce que**
les auxiliaires de commutation (11) sont intégrés dans une logique de contrôle de mémoire (9) de la mémoire (2) .

3. Carte à pouce selon l'une des revendications 1 et 2,
**caractérisée en ce que**
l'interface de mémoire (6) est conçue en tant que logique de contrôle entrée/sortie de sorte que des données peuvent être écrites dans la mémoire (2)) par transfert synchrone.

4. Carte à puce selon l'une des revendications 1 à 3,
**caractérisée en ce que**
l'interface de mémoire (6) forme une unité modulaire avec la logique de contrôle de mémoire (9) et la mémoire (2).

5. Carte à puce selon l'une des revendications 1 à 4.
**caractérisée en ce que**
le microprocesseur (5) dispose d'organes de commande de sorte que ce n'est qu'après réalisation d'une autorisation que l'auxiliaire de commutation (11) peut être actionné pour permettre le transfert de données de l'unité de personnalisation (1) à la mémoire (2), par l'intermédiaire de l'interface de mémoire (6) de la mémoire (2).

6. Carte à puce selon l'une des revendications 1 à 5,
**caractérisée en ce que**
la mémoire (2) est conçue en tant que mémoire morte, notamment en tant que mémoire flash EEPROM.
